# EUROPEAN PATENT APPLICATION

(11) **EP 2 749 494 A2**
(43) Date of publication of application: **02.07.2014**
(21) Application number: 13197429.7
(22) Date of filing: 16.12.2013
(51) Int. Cl.: B64C 25/40

(54) **Landing gear wheel drive system**

(30) Priority: 31.12.2012 US 201213731142
(71) Applicant: Goodrich Corporation, Charlotte, North Carolina 28217-4578 (US)
(72) Inventor: WALSH, Andrew, Dayton, OH Ohio 45414 (US)
(74) Representative: Bridge, Kerry Ann

(57) **Abstract**

A landing gear wheel drive system includes a landing gear strut, 14, a wheel, 12, a drive loop carrier assembly, 24, a drive loop, 28, and a displacement system, 26. The wheel, 12, is rotatably attached to the landing gear strut, 14, and includes a ring gear, 20, mounted to the wheel, 12. The drive loop carrier assembly, 24, includes a plurality of toothed pulleys, 30. The drive loop, 28, extends around the toothed pulleys, 30, to form a continuous loop. The displacement system, 26, is connected to the drive loop carrier assembly, 24, to selectively engage with the ring gear, 20.

## Description

### BACKGROUND

The present invention relates to engine-off taxiing of an aircraft. In particular, the invention relates to a wheel drive system for taxiing an aircraft.

Aircraft commonly employ the use of their primary propulsion method to taxi the aircraft during pre-flight and post-flight activities. Using the primary propulsion method of the aircraft to taxi bums additional fuel which creates both a negative environmental and economic impact. It is desirable to incorporate a means of taxiing an aircraft without burning fuel to engage the primary propulsion source of the aircraft. This is known as engine-off taxi.

Proposals have been made to attach a motor to the wheel of an aircraft by connecting a gear of a motor to a gear of the aircraft wheel. Directly connecting the gears of a motor and aircraft wheel can cause problems as the amount of torque applied to the gears of this arrangement may lead to the need to use an exotic design material for the gears or pinions. A gear-to-gear drive arrangement also is difficult to shield or lubricate and the gears wear out quickly. An example of such a proposal is set forth in US Pat. Pub. 2011/0156472A1.

Additional proposals for driving the wheel of an aircraft have suggested the driving motor be in permanent engagement with the aircraft wheel. Such an arrangement experiences problems during takeoff and landing where the increased rates of acceleration and speed cause issues of wear in the drive mechanism and safety concerns of failures at high speed. Other means to drive the aircraft wheel, such as grabbing the tire or the wheel, present performance and durability challenges.

### SUMMARY

An embodiment of the present invention is a wheel drive apparatus for driving a wheel having a ring gear. The wheel drive apparatus includes a drive loop carrier assembly, a drive loop, and a displacement system. The drive loop carrier assembly includes a plurality of toothed pulleys. The drive loop extends around the toothed pulleys to form a continuous loop. The displacement system is connected to the drive loop carrier assembly to selectively engage with the ring gear.

Another embodiment is a landing gear wheel drive system including a landing gear strut, a wheel, a drive loop carrier assembly, a drive loop, and a displacement system. The wheel is rotatably attached to the landing gear strut and includes a ring gear mounted to the wheel. The drive loop carrier assembly includes a plurality of toothed pulleys. The drive loop extends around the toothed pulleys to form a continuous loop. The displacement system is connected to the drive loop carrier assembly to selectively engage with the ring gear.

### BRIEF DESCRIPTION OF THE DRAWINGS

FIG. 1 is perspective view of a landing gear tire and wheel arrangement for use with embodiments of a wheel drive apparatus.
FIG. 2 is a simplified perspective view of a wheel drive apparatus embodying the present invention.
FIGS. 3A and 3B are side views of the wheel drive apparatus of FIG. 2 disengaged and engaged, respectively.

### DETAILED DESCRIPTION

Embodiments of the present invention provide a landing gear wheel drive apparatus for an aircraft that does not involve the use of the primary propulsion method of the aircraft. The wheel drive apparatus solves the problems noted above by employing a displacement system to engage and disengage a drive loop carrier assembly and drive loop to selectively drive a wheel through a ring gear. Disengaging the drive loop carrier assembly allows an aircraft to takeoff or land without engaging the wheel drive apparatus. This is desirable because a permanently attached wheel drive mechanism may suffer premature failure due to the high rates of acceleration and speed during aircraft takeoff or landing. High acceleration rates cause permanently engaged wheel drive assemblies to wear and break down quickly during the life-span of a wheel drive mechanism and present a safety hazard if failure of the drive system were to cause a locked wheel condition. The capability to disengage the wheel drive apparatus prevents undue wear during aircraft takeoff or landing.

Importantly, the use of the drive loop to engage the ring gear allows for an increased surface area of torque applied to the wheel. A traditional gear-to-gear arrangement includes a small point of contact from the gear of the wheel drive mechanism to the gear of the wheel, In embodiments of the present invention, force applied to the ring gear is applied over a greater surface area of the ring gear, thus decreasing the amount of mechanical stress experienced by components of the wheel drive apparatus and the ring gear. The decrease in mechanical stress helps to decrease the amount of wear on the wheel drive apparatus and the ring gear. The wheel drive apparatus is also less susceptible to damage from contaminants and shock loads than a direct gear-to-gear drive assembly would be. The wheel drive apparatus eliminates the complexity of a clutching mechanism required for a conventional drive that is in constant engagement with an aircraft wheel.

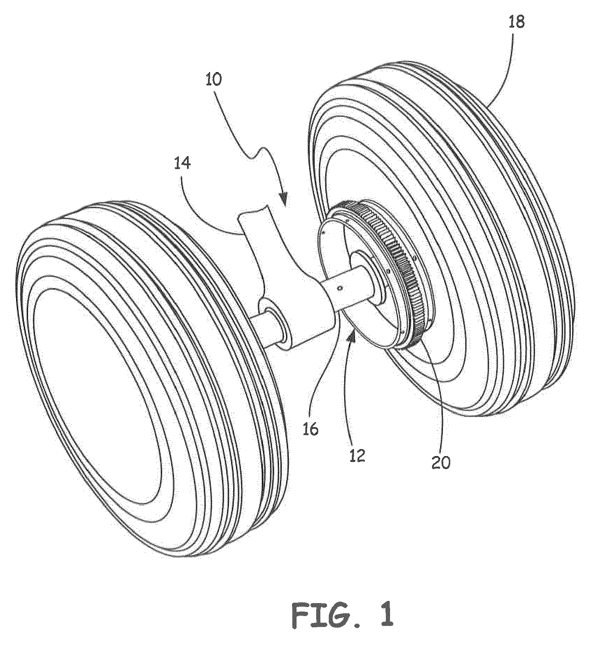

FIG. 1 is a perspective view of a landing gear tire and wheel arrangement for use with embodiments of a wheel drive apparatus. Landing gear 10 of an aircraft (not shown) contains wheel 12, landing gear strut 14, wheel axle 16, tire 18, and ring gear 20. Wheel 12 is rotatably connected to landing gear strut 14 by wheel axle 16 such that wheel 12 rotates as the aircraft maneuvers during taxing of the aircraft. Ring gear 20 is mounted to wheel 12 near an outer diameter of wheel 12. Tire 18 is mounted to wheel 12 such that tire 18 rotates with wheel 12. Landing gear 10 may be, for example, a nose landing gear or a main landing gear of the aircraft.

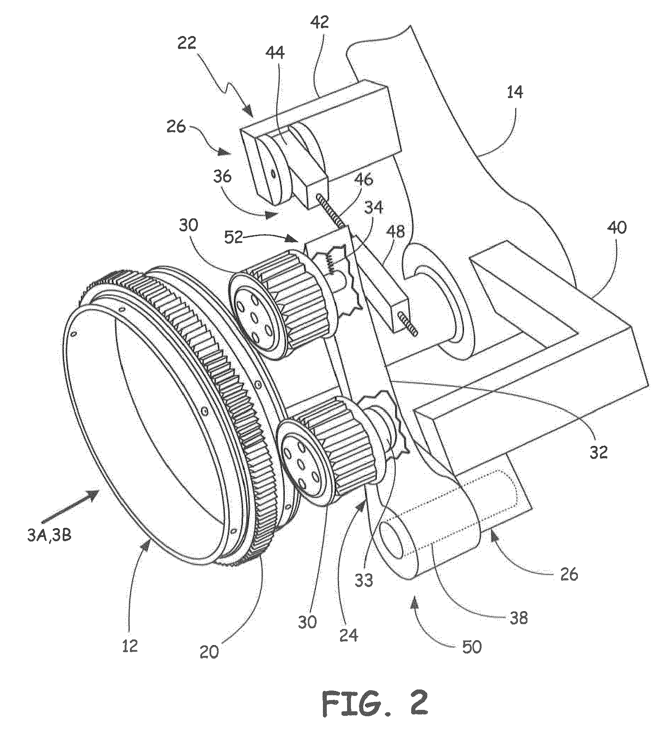

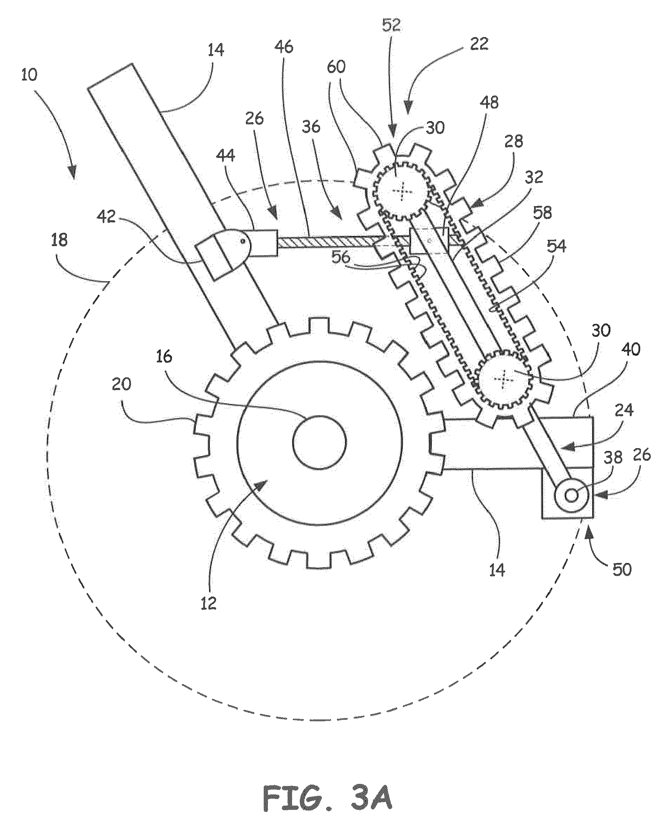

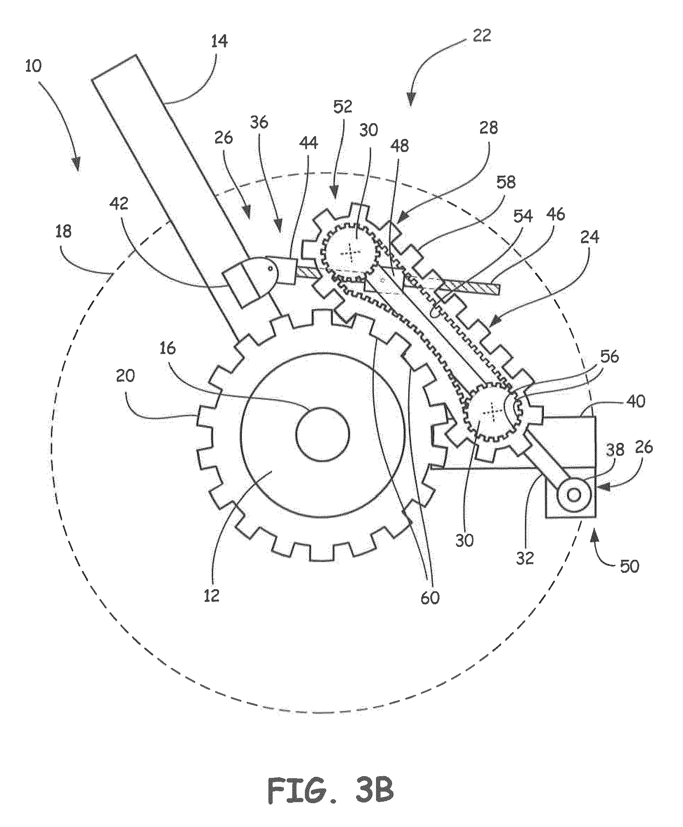

FIG. 2 is a simplified perspective view of a wheel drive apparatus embodying the present invention. Tire 18 and a portion of wheel 12 supporting tire 18 are omitted for clarity. Wheel drive apparatus 22 includes drive loop carrier assembly 24, displacement system 26, and drive loop 28 (omitted for clarity in FIG. 2, and shown in FIGS. 3A and 3B). Drive loop carrier assembly 24 includes at least two toothed pulleys 30 attached to drive arm 32, drive motor 33, and loop tensioning mechanism 34. Displacement system 26 includes actuator 36, pivot 38, first strut extension 40, and second strut extension 42. Strut extension 40 and strut extension 42 each extend from landing gear strut 14 to connect components of wheel drive apparatus 22 to landing gear strut 14. Motor 33 may be powered electrically, hydraulically, or pneumatically. Actuator 36 includes displacement motor 44, ball screw 46, and ball nut 48. Drive motor 33 and displacement motor 44 may be electrical motors, pneumatic motors or hydraulic motors. In some embodiments, a transmission, or gear box, may be employed with at least one of drive motor 33 and displacement motor 44. In some embodiments, drive motor 33 and displacement motor 44 are powered by the same force (e.g. electromechanical, hydraulic, pneumatic) to limit the power supply connects to landing gear 10.

Pivot 38 is mounted within and extends outward from strut extensions 40 on an axis parallel to wheel axle 16. Drive arm 32 includes first end 50, and second end 52 opposite first end 50. Drive arm 32 is pivotally mounted onto pivot 38 at first end 50. Ball nut 48 connects actuator 36 to drive arm 32. Ball nut 48 pivotally connects actuator 36 to drive arm 32 away from first end 50, near second end 52. The nearer ball nut 48 connects to second end 52, the greater the mechanical advantage available in pivoting drive arm 32. Displacement motor 44 is pivotally connected to strut extension 42, which also extends from landing gear strut 14. Ball screw 46 is connected to displacement motor 44 and is engaged with ball nut 48 such that as displacement motor 44 rotates connected ball screw 46, ball screw 46 rotates within ball nut 48, and causes ball nut 48, and attached drive arm 32, to move.

Two toothed pulleys 30 are mounted along drive arm 32. Each of toothed pulleys 30 is rotatable on a pulley axis that is parallel to, and spaced apart from, wheel axis 16 and from the other of toothed pulleys 30. Drive loop 28 extends around toothed pulleys 30 to form a continuous loop between toothed pulleys 30, as shown in FIGS. 3A-3B. In the embodiment shown in FIG. 2, motor 33 is connected to one of toothed pulleys 30 to impel drive loop 28. The other of toothed pulleys 30 is an idler pulley, which does not impel drive loop 28. In some embodiments, both of toothed pulleys 30 are connected to motor 33 (or a separate motor 33 is provided for each toothed pulley 30) so that both toothed pulleys 30 impel drive loop 28. The embodiment described above includes two toothed pulleys 30. However, it is understood that the present invention encompasses embodiments including more than two toothed pulleys 30. Motor 33 is shown disposed within drive arm 32 to shield motor 33 from dust and grit and to create a more compact arrangement. However, it is understood that he present invention encompasses embodiments where motor 33 is disposed external to drive arm 32 and includes its own environmental protection case.

In some embodiments, drive loop carrier assembly 24 also includes a loop tensioning mechanism to maintain consistent tension on drive loop 28. In the embodiment of FIG. 2, drive loop carrier assembly 24 includes loop tensioning mechanism 34. Loop tensioning mechanism 34 is a spring connected to one of two toothed pulleys 30 within drive arm 32. In other embodiments, loop tensioning mechanism 34 may be a tensioning pulley external to drive arm 32, or an articulation in drive arm 32 that is subject to a spring force.

FIGS. 3A and 3B are side views of the wheel drive apparatus of FIG. 2 showing drive loop 28 disengaged and engaged, respectively. In the embodiment shown in FIGS. 3A and 3B, drive loop 28 is a toothed drive belt and includes inner surface 54 which includes inner teeth 56, and outer surface 58 which includes outer teeth 60. As noted above, drive loop 28 extends around toothed pulleys 30 to form a continuous loop between toothed pulleys 30. Inner teeth 56 are a series of teeth shaped for meshing with toothed pulleys 30. Outer teeth 60 are a series of teeth shaped for meshing with ring gear 20. FIG. 3A shows drive loop carrier assembly 24 moved away from wheel axis 16 by displacement system 26 such that drive loop 28 is disengaged from ring gear 20. FIG. 3B shows drive loop carrier assembly 24 moved toward wheel axis 16 by displacement system 26. This movement happens when displacement motor 44 is powered to rotate in a first direction, rotating ball screw 46, which rotates within ball nut 48, causing ball nut 48 and attached drive arm 32 to pivot toward wheel axis 16 and engage drive loop 28 with ring gear 20. If wheel 12 is not initially rotating, once drive loop 28 engages with ring gear 20 by meshing outer teeth 60 of outer surface 58 with ring gear 20, motor 33 is powered, rotating toothed pulley 30 connected to motor 33. If wheel 12 is already rotating, for example, during coasting after a landing, motor 33 is powered before drive loop 28 engages with ring gear 20 to aid in the meshing of outer teeth 58 with ring gear 20. Rotating toothed pulley 30 causes drive loop 28 to move though the meshing of toothed pulleys 30 and inner teeth 56. As drive loop 28 moves, ring gear 20 rotates through the meshing of outer teeth 58 with ring gear 20, causing wheel 12 to rotate tire 18.

Disengaging drive loop 28 follows the opposite sequence. If drive loop 28 is to be disengaged when wheel 12 is stopped, motor 33 is stopped, so that it is no longer impelling toothed pulley 30 stopping movement of drive loop 28. Next, displacement motor 44 is powered to rotate in a second direction, opposite the first direction direction, rotating ball screw 46, which rotates within ball nut 48, causing ball nut 48 and attached drive arm 32 to pivot away from wheel axis 16 and disengage drive loop 28 from ring gear 20. If drive loop 28 is to be disengaged when wheel 12 is still rotating, drive loop 28 is disengaged before motor 33 is stopped.

In the embodiment describe above in reference to FIGS. 3A and 3B, drive loop 28 is a toothed drive belt. In other embodiments, drive loop 28 is a roller chain. It is understood that the present invention encompasses embodiments where drive loop 28 is a toothed drive belt or a roller chain. In embodiments where drive loop 28 is a roller chain, the description is as for the embodiment described above in reference to FIGS. 3A and 3B, except that inner teeth 56 and outer teeth 60 are replaced with a single set of rollers that mesh with both toothed pulleys 30 and ring gear 20.

Thus, drive loop carrier assembly 24 is mounted such that it can be moved as a unit to bring drive loop 28 in and out of contact with ring gear 20 of wheel 12 by displacement system 26. In this way, displacement system 26 selectively engages and disengages wheel drive apparatus 22. Drive loop carrier assembly 24 includes loop tensioning mechanism 34 to ensure that proper tension of drive loop 28 is maintained whether drive loop carrier assembly 24 is engaged with ring gear 20 or not. In some embodiments, displacement system 26 is designed such that actuator 36 must be powered, or actuated, to engage drive loop carrier assembly 24 with ring gear 20. In such embodiments, a loss of power results in displacement system 26 disengaging drive loop 28 from ring gear 20.

The disengaged position of drive loop carrier assembly 24 shown in FIG. 3A allows an aircraft to takeoff or land without engaging wheel drive apparatus 22. The disengaged position of wheel drive apparatus 22 from ring gear 20 is desirable because a permanently attached wheel drive apparatus suffer premature failure due to the high rates of acceleration during aircraft takeoff and landing. High acceleration rates cause permanently engaged wheel drive assemblies to wear and break down quickly during the life-span of a wheel drive apparatus. The capability to disengage wheel drive apparatus 22 of the present invention prevents undue wear during aircraft takeoff and landing.

The engaged position of drive loop carrier assembly 24 shown in FIG. 3B allows an aircraft to taxi without employing the primary propulsion method of the aircraft. An advantage of wheel drive apparatus 22 of the present invention over a traditional gear-to-gear wheel drive apparatus is that the use of drive loop 28 to engage ring gear 20 allows for an increased surface area of torque applied to wheel 12. A traditional gear-to-gear arrangement includes a small point of contact from the gear of the wheel drive apparatus to the gear of the wheel. With the wheel drive apparatus 22 of the present invention, force applied to ring gear 20 from drive loop carrier assembly 24 through drive loop 28 is applied over a greater surface area of ring gear 20, thus decreasing the amount of mechanical stress experienced by components of wheel drive apparatus 22 and ring gear 20. The decrease in mechanical stress helps to decrease the amount of wear on wheel drive apparatus 22 and ring gear 20.

Embodiments of the present invention allow for a wheel drive apparatus for an aircraft that does not involve the use of the primary propulsion method of the aircraft. Burning engine fuel for taxiing the aircraft causes environmental issues as well as economic issues of using expensive engine fuel to taxi the aircraft. The use of drive loop carrier assembly 24 and drive loop 28 to drive wheel 12 through ring gear 20 is also less susceptible to damage from contaminants and shock loads than a direct gear-to-gear drive assembly would be. Wheel drive apparatus 22 also eliminates the complexity of a clutching mechanism required for a conventional loop drive that is in constant engagement with an aircraft wheel.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

### Discussion of Possible Embodiments

The following are non-exclusive descriptions of possible embodiments of the present invention.

A wheel drive apparatus for driving a wheel having a ring gear includes a drive loop carrier assembly, a drive loop, and a displacement system. The drive loop carrier assembly includes a plurality of toothed pulleys. The drive loop extends around the toothed pulleys to form a continuous loop. The displacement system connects to the drive loop carrier assembly to selectively engage the drive loop with the ring gear.

The wheel drive apparatus of the preceding paragraph can optionally include, additionally and/or alternatively, any one or more of the following features, configurations and/or additional components:

the drive loop carrier assembly further includes a drive motor connected to at least one of the toothed pulleys to drive rotation of the connected toothed pulley; and each toothed pulley is rotatable on a pulley axis parallel to, and spaced apart from, a wheel axis and another pulley axis; and the displacement system selectively engages the drive loop with the ring gear by moving the drive loop carrier assembly toward the wheel axis to engage the drive loop with the ring gear, and moving the drive loop carrier assembly away from the wheel axis to disengage the drive loop from the ring gear;

the toothed pulleys are connected to a drive motor to drive rotation of the connected toothed pulleys;

the displacement system includes a pivot connected to a first end of the drive loop carrier assembly; and an actuator connected to the drive loop carrier to rotate the drive loop carrier assembly about the pivot and move the drive loop carrier assembly relative to the wheel axis;

the displacement system disengages the drive loop from the ring gear when the actuator loses power;

the drive loop carrier assembly further includes a loop tensioning mechanism to maintain a consistent tension on the drive loop whether engaged or disengaged with the ring gear;

the drive loop is a drive belt, the drive belt including an inner surface having a series of inner teeth shaped for meshing with the toothed pulleys; and an outer surface having a series of outer teeth shaped for meshing with the ring gear; and

the drive loop is a drive chain, the drive chain including a series of links shaped for meshing with the toothed pulleys and the ring gear.

A landing gear wheel drive system includes a landing gear strut, a wheel; a drive loop carrier assembly, a drive loop, and a displacement system. The wheel is rotatably attached to the landing gear strut and includes a ring gear mounted to the wheel. The drive loop carrier assembly is connected to the landing gear strut and includes a plurality of toothed pulleys. The drive loop extends around the toothed pulleys to form a continuous loop. The displacement system is connected to the landing gear strut and to the drive loop carrier assembly to selectively engage the drive loop with the ring gear.

The landing gear wheel drive system of the preceding paragraph can optionally include, additionally and/or alternatively, any one or more of the following features, configurations and/or additional components:

the drive loop carrier assembly further includes a drive motor connected to at least one of the toothed pulleys to drive rotation of the connected toothed pulley; and each toothed pulley is rotatable on a pulley axis parallel to, and spaced apart from, a wheel axis and another pulley axis; and the displacement system selectively engages the drive loop with the ring gear to drive the wheel by moving the drive loop carrier assembly toward the wheel axis, and moving the drive loop carrier assembly away from the wheel axis to disengage the drive loop from the ring gear to cease driving the wheel;

the toothed pulleys are connected to a drive motor to drive rotation of the connected toothed pulleys;

the wheel is at least one of a main wheel and a nose wheel mounted to a landing gear strut of an aircraft; and the displacement system selectively engages the drive loop with the ring gear during taxiing of the aircraft, and disengages the drive loop from the ring gear when the aircraft is not taxiing;

the displacement system includes a pivot connecting a first end of the drive loop carrier assembly to the landing gear strut; and an actuator connected to the landing gear strut and to the drive loop carrier to rotate the drive loop carrier assembly about the pivot, and move the drive loop carrier assembly relative to the wheel axis;

the actuator includes a ball nut connected the drive loop carrier assembly closer to a second end of the drive loop carrier than to the first end, the second end opposite from the first end; a ball screw in threaded engagement with the ball nut, and a displacement motor connected to the landing gear strut and to the ball screw to rotate the ball screw, and move the engaged ball nut to rotate the drive loop carrier assembly about the pivot;

the displacement system disengages the drive loop from the ring gear when the actuator loses power;

the drive loop carrier assembly further includes a loop tensioning mechanism to maintain a consistent loop tension whether engaged or disengaged with the ring gear;

the drive loop is a drive belt, the drive belt including an inner surface having a series of inner teeth shaped for meshing with the toothed pulleys; and an outer surface having a series of outer teeth shaped for meshing with the ring gear;

the drive loop is a drive chain, the drive chain including a series of links shaped for meshing with the toothed pulleys and the ring gear;

the ring gear is mounted near an outer diameter of the wheel; and

the wheel is at least one of a main wheel and a nose wheel of an aircraft.

## Claims

1. A wheel drive apparatus for driving a wheel (12) having a ring gear (20), the apparatus comprising:
a drive loop carrier assembly (24) including a plurality of toothed pulleys (30);
a drive loop (28) extending around the toothed pulleys (30) to form a continuous loop; and
a displacement system (26) connected to the drive loop carrier assembly (24) to selectively engage the drive loop with the ring gear (20).

2. The apparatus of claim 1, wherein:
the drive loop carrier assembly (24) further includes a drive motor (33) connected to at least one of the toothed pulleys (30) to drive rotation of the connected toothed pulley; and each toothed pulley (30) is rotatable on a pulley axis parallel to, and spaced apart from, a wheel axis and another pulley axis; and
the displacement system (26) selectively engages the drive loop (28) with the ring gear (20) by moving the drive loop carrier assembly (24) toward the wheel axis to engage the drive loop (28) with the ring gear (20), and moving the drive loop carrier assembly (24) away from the wheel axis to disengage the drive loop (28) from the ring gear (20).

3. The apparatus of any preceding claim, wherein the displacement system (26) includes:
a pivot (38) connected to a first end of the drive loop carrier assembly (24); and
an actuator (36) connected to the drive loop carrier to rotate the drive loop carrier assembly (24) about the pivot (38) and move the drive loop carrier assembly (24) relative to the wheel axis.

4. The apparatus of any preceding claim, wherein the drive loop carrier assembly (24) further includes a loop tensioning mechanism (34) to maintain a consistent tension on the drive loop (28) whether engaged or disengaged with the ring gear (20).

5. A landing gear wheel drive system comprising:
a landing gear strut (14);
a wheel (12) rotatably attached to the landing gear strut (14), the wheel including a ring gear (20) mounted to the wheel (12);
a drive loop carrier assembly (24) including a plurality of toothed pulleys (30), the drive loop carrier assembly (24) connected to the landing gear strut (14);
a drive loop (28) extending around the toothed pulleys (30) to form a continuous loop; and
a displacement system (26) connected to the landing gear strut (14) and to the drive loop carrier assembly (24) to selectively engage the drive loop (28) with the ring gear (20).

6. The system of claim 5, wherein:
the drive loop carrier assembly (24) further includes a drive motor (33) connected to at least one of the toothed pulleys (30) to drive rotation of the connected toothed pulley (30); and each toothed pulley (30) is rotatable on a pulley axis parallel to, and spaced apart from, a wheel axis and another pulley axis; and
the displacement system (26) selectively engages the drive loop (28) with the ring gear (20) to drive the wheel by moving the drive loop carrier assembly (24) toward the wheel axis, and moving the drive loop carrier assembly (24) away from the wheel axis to disengage the drive loop (28) from the ring gear (20) to cease driving the wheel.

7. The system of claim 6, wherein at least two of the toothed pulleys (30) are connected to a drive motor (33) to drive rotation of the connected toothed pulleys (30).

8. The system of claim 6, wherein the wheel is at least one of a main wheel and a nose wheel mounted to a landing gear strut (14) of an aircraft; and the displacement system (26) selectively engages the drive loop (28) with the ring gear (20) during taxiing of the aircraft, and disengages the drive loop (28) from the ring gear (20) when the aircraft is not taxiing.

9. The system of claim 6, wherein the displacement system includes:
a pivot (38) connecting a first end of the drive loop carrier assembly (24) to the landing gear strut (14); and
an actuator (36) connected to the landing gear strut (14) and to the drive loop carrier to rotate the drive loop carrier assembly (24) about the pivot (38), and move the drive loop carrier assembly (24) relative to the wheel axis.

10. The system of claim 9, wherein the actuator includes:
a ball nut connected the drive loop carrier assembly (24) closer to a second end of the drive loop carrier than to the first end, the second end opposite from the first end;
a ball screw in threaded engagement with the ball nut, and
a displacement motor connected to the landing gear strut and to the ball screw to rotate the ball screw, and move the engaged ball nut to rotate the drive loop carrier assembly about the pivot.

11. The apparatus of claim 3 or the system of claim 9, wherein the displacement system (26) disengages the drive loop (28) from the ring gear (20) when the actuator (36) loses power.

12. The system of any of claims 5 to 11, wherein the drive loop carrier assembly (24) further includes a loop tensioning mechanism (34) to maintain a consistent loop tension whether engaged or disengaged with the ring gear (20).

13. The apparatus of claim 1 or the system of claim 5, wherein the drive loop (28) is a drive belt, the drive belt including:
an inner surface having a series of inner teeth shaped for meshing with the toothed pulleys; and
an outer surface having a series of outer teeth shaped for meshing with the ring gear.

14. The apparatus of claim 1 or the system of claim 5, wherein the drive loop (28) is a drive chain, the drive chain including a series of links shaped for meshing with the toothed pulleys and the ring gear.

15. The system of any of claims 5 to 14, wherein the ring gear (20) is mounted near an outer diameter of the wheel, and/or wherein the wheel is at least one of a main wheel and a nose wheel of an aircraft.
